# EUROPEAN PATENT APPLICATION

(11) **EP 0 601 629 A2**
(43) Date of publication of application: **15.06.1994**
(21) Application number: 93203321.0
(22) Date of filing: 26.11.1993
(51) Int. Cl.: H04J 3/06, H04L 7/04, H04B 7/26, H04M 1/72

(54) **Method for the acquirement of synchronism between base station and portable phone in a digital cordless telephony system**

(30) Priority: 10.12.1992 IT MI922796
(71) Applicant: ITALTEL SOCIETA ITALIANA TELECOMUNICAZIONI s.p.a., I-20149 Milano (IT)
(72) Inventor: Rosina, Giancarlo, I-20018 Sedriano MI (IT); Sforzini, Luigi, I-20018 Sedriano MI (IT); De Benedittis, Rossella, I-20020 Barbaiana di Lainate MI (IT)
(74) Representative: Giustini, Delio

(57) **Abstract**

The object of the present invention is to identify a method for the acquirement of the synchronism between base station and portable phone in a digital cordless telephony system.
The method consists of:
- carrying out a permanent research on autocorrelation functions of the received signal using a first threshold signal (S1);
- defining the locking of the portable phone on the time slot having caused a peak higher than the above mentioned first threshold;
- limiting the reception in the following half frame to a window of ± K bit around the peak pointed out reducing simultaneously the threshold to a second level S2;
- verifying in the following half frame the correctness of the time slot received after the above mentioned locking by analysing the control bits CRC associated in each time slot to the signalling and traffic bits.

## Description

### Field of the Invention

The present invention relates generally to a method for the acquirement of the synchronism between a base station and a portable phone set in a digital cordless telephony system. The invention is preferably applied in the system known as DECT (Digital European Cordless Telecommunications).

### Background Art

The private telephony systems include a plurality of transceiver radio base stations distributed in a way to cover the interested area, and connected to a switching network - which may be the public one or a private switching network (PABX) - and portable subscriber sets connecting through radio with the base stations, and therefore they are able to communicate among them and with other fixed subscribers connected to the public/private telephone network. The links may be of the vocal type or allow the exchange of data occupying the equivalent of several "vocal" channels.

Unlike to what happens in the cellular radiomobile system the area covered by a base station or cell is in this case rather reduced covering sometimes just the radius of some tens or hundreds of meters. Typical applications of cordless telephony systems can be found in industrial plants where they may replace the installation of a wired network, in commercial or urban centres where they may advantageously replace public telephone boxes, and others more.

The telecommunication network for the cordless telephony of the above mentioned type (DECT) is a digital one. The radio access belongs to the category FDMA (Frequency Division Multiple Access) - TDMA (Time Division Multiple Access) - TDD (Time Division Duplex).

The system is a TDD one as the transmission and the reception do not occur simultaneously. More exactly, with reference to Fig 2(a), the basic frame of 10 milliseconds is divided in two halves, and during the first 5 ms the base station emits and the portable phones receive a half frame (the so called half frame downlink), and in the following 5 ms occurs the contrary (half frame uplink). Each half frame is set up by 12 time channels or time slots (TDMA), each of which consist of 420 (or in certain cases of 424) bits. The channels are transmitted or received using 10 different frequencies (FDMA) for a total of 120 channels available to the system, which are naturally reassigned to cells which are sufficiently distant one from the other in order not to create any interference problem. The above mentioned time channels or time slots provide moreover for signalling and traffic fields as well as for control bits CRC, for a total of 420 (or 424) bits per time slot (Fig. 2(b)).

Given the nature of the system the fixed set and the portable one must be perfectly aligned not only in terms of frequencies but also in terms of time.

A first problem inherent in the synchronization of a cordless system derives from the fact that the portable phone does not know the time reference of the station it wants to connect with or it is exchanging informations with, but at the same time it must be able to catch or read correctly the received frame. However, because of the uncertainty due to the distance (unknown and anyhow variable in time) between base station and portable phone as well as to the simultaneous presence of the emissions of other adjacent stations, the synchronization between the sets cannot be imposed, but it must be constantly researched in the exchange of each information time slot.

As already mentioned the base station has a preset time reference for the time slots to transmit and eventual shiftings may derive from frequency reference inaccuracies, and they are modest, therefore at the base station receiving the data transmitted by a portable phone a "window" of -2 +4 bits is sufficient. In other words the base station has only to control that the time slots known to it in terms of time reference are at least active.

At the contrary instead the portable phones have to synchronize on the base sets and therefore , for example at the moment of the ignition in order to acquire the synchronism, that is to lock, the portable phone needs an indefinite window (within the half frame) to identify the time slot containing the synchronism code of its competence as specified hereafter.

There is not only the necessity of acquiring the synchronism at the moment of the ignition of the portable phone but whenever a time slot is transmitted. Each base or portable receiver has always to synchronize at each time slot, that is it must always perform the following steps:
- 1. adapt its own clock to that of the transmitter, and
- 2. identify the beginning of the frame and consequently the beginning of the time slot (due to it) to be received.

Once these two steps are performed the portable phone is able to read correctly the time slot informations due to it.

For this reason a synchronism field S exists (Fig. 2a) in each time slot. The synchronism field S includes 32 bits (Fig 2b) and is divided in two groups of 16 bits each. The first 16 bits, from S0 to S15 are "0" and "1" following each other alternatively and are used to adapt the clock of the portable phone to that of the fixed one, that is for the recovery of the clock (in phase as well as in frequency). Once this recovery is realized the two clocks are synchronized, and it is necessary to fix the beginning of the frame, that is realizing the time alignment.

For this second aim the remaining 16 bits from S16 to S31 include a known word or code formed by a sequence of bits having good correlation properties, that is they produce in output a narrow signal peak when submitted to an autocorrelation procedure.

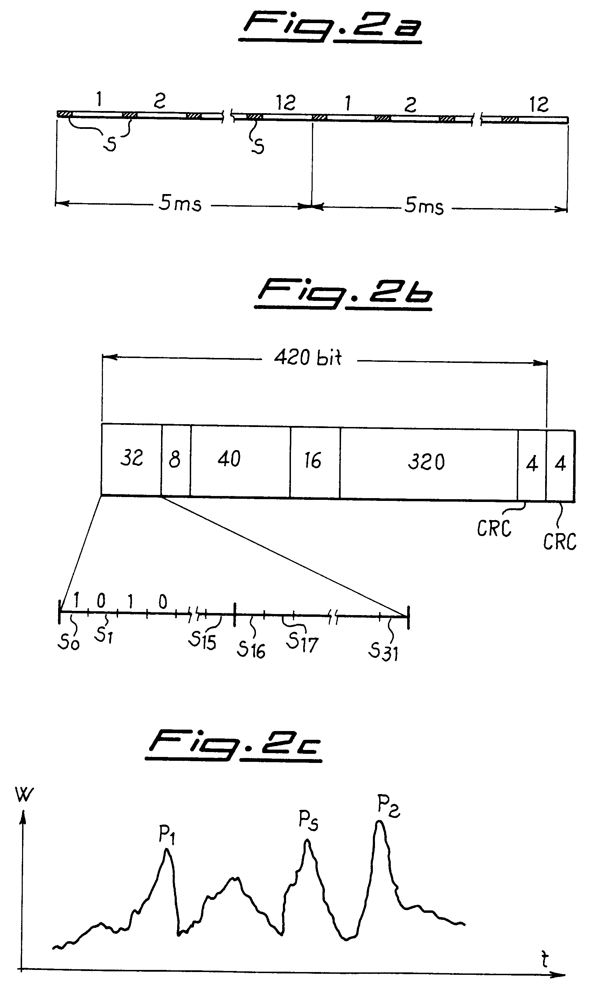

During the operation for the acquirement of the synchronism the portable phone calculates constantly the correlation functions of the received signal, and on the obtained graph (having for example the course shown in Fig. 2c) it must identify the (time) position of the peak Ps produced by the synchronism word separating it from the other peaks (P1, P2 etc.) deriving instead from the undesired correlation of other bits of the half frame.

Although the synchronism peak is rather high it may turn out to be of the same dimension of other spurious peaks (P1, P2, etc.) and this creates a considerable technical problem as it is not possible to identify the synchronization sequence peak by simply fixing a detection threshold at suitable high level. On the other side if this threshold is reduced to avoid to miss completely the peak the receiver set may synchronize on peaks which are not deriving from the synchronization sequence, and which will be recognized as such only after a certain number of received frames when the control bits CRC indicate repeatedly error referring to the bit pack received by the presumed synchronization.

When errors are noticed the procedure must be repeated by locking on another peak. If the synchronization does not occur within a preset time there may be time slot losses and message reception difficulties.

### Objects of the Invention

Therefore one of the objects of this invention is to resolve in a simple and efficient way the above mentioned technical problem and in particular to minimize the wrong lockings and optimize the locking of a portable set on a base station in a digital cordless telephony system.

### Disclosure of the Invention

The invention consists more precisely of a method for the acquirement of the synchronism by a portable telephone set in a digital cordless telephony system wherein in each time slot a synchronism field is transmitted including a first bit sequence for the adaptation of the clock of the portable telephone set, and a second known bit sequence suitable to generate a signal presenting a peak when its autocorrelation function is revealed,
characterized in that it provides for the following phases:
a. performing in a continuous way the autocorrelation function of the received signal;
b. checking if said correlation function contains a peak with a level higher to a first threshold level equal to a first fraction of the theoretic maximum value for said peak corresponding to a preset maximum admissible number of errors with respect to said known sequence;
c. if the above mentioned verification results to be positive defining the connection of the portable set with the time slot containing the synchronization field having defined the above mentioned peak;
d. limiting the reception in the following half frame to the signals allocated in a time window of ± K bits around the bits of said second sequence reducing simultaneously the threshold to a second level equal to a second fraction of said theoretical maximum level;
e. verifying in the following half frames the accuracy of the time slot received by this synchronism through the control bits associated in each time slot to the signalling and traffic bits, and if this verification turns out to be negative repeating the operations a.) - d.) for the following peaks of the autocorrelation function.

Further advantageous characteristics are the object of the subordinate claims.

### Brief Description of the Drawings

The invention will now be illustrated referring to preferred but not limiting forms of realization shown in the enclosed drawings in which:
Fig. 1 is a general scheme showing the structure of a cordless system of the DECT type included in a telecommunication network;
Fig. 2 already described shows schematically the radio access structure of the digital telephony system in which the invention is applied, and more precisely Fig. 2(a) illustrates the structure of the two half frames, Fig. 2(b) the structure of a time slot in the field S, and Fig. 2(c) (in function of the time) a possible result of the correlation performed on signals received before the synchronism acquirement;
Fig. 3 is a block scheme showing the procedure according to the invention; and
Fig. 4 illustrates the realization of a synchronization circuit realized by the present invention.

### Detailed Description of the Preferred Embodiment

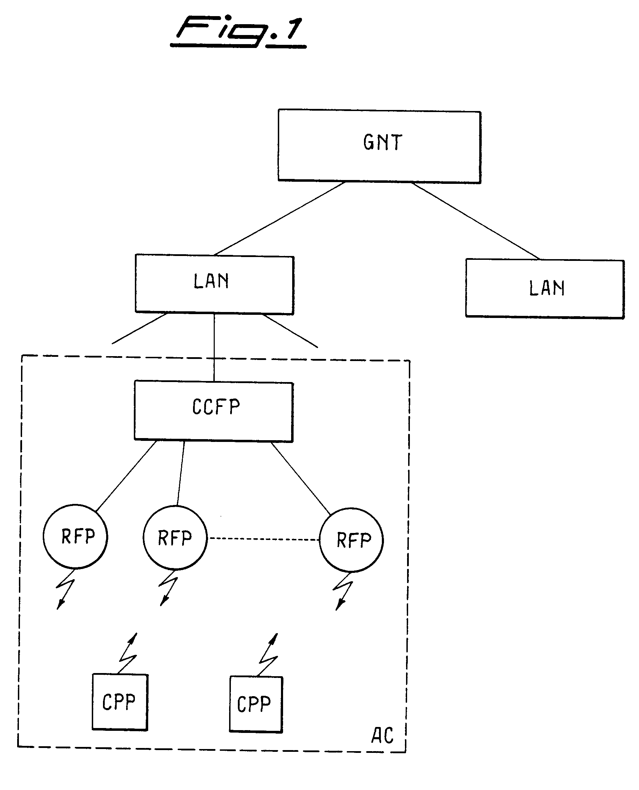

The general scheme of Fig. 1 shows the structure of a cordless system, in particular a DECT system, and its inclusion in the telecommunication network. The cordless system provides for a certain number of portable sets CPP (Cordless Portable Part), mobile within the covered area AC of the system indicated by hatching connected through radio to a base station RFP (Radio Fixed Part) which at their turn are connected by cable to a centralized element CCFP (Common Control Fixed Part). The centralized control element is connected to a local network LAN provided with a proper PABX, and several networks LAN end up in a global network GNT for example a PSTN (Public Switching Telephone Network), a network integrated in the services (ISDN), a packet switching node according to the protocol X.25, a radiomobile network GSM, etc.

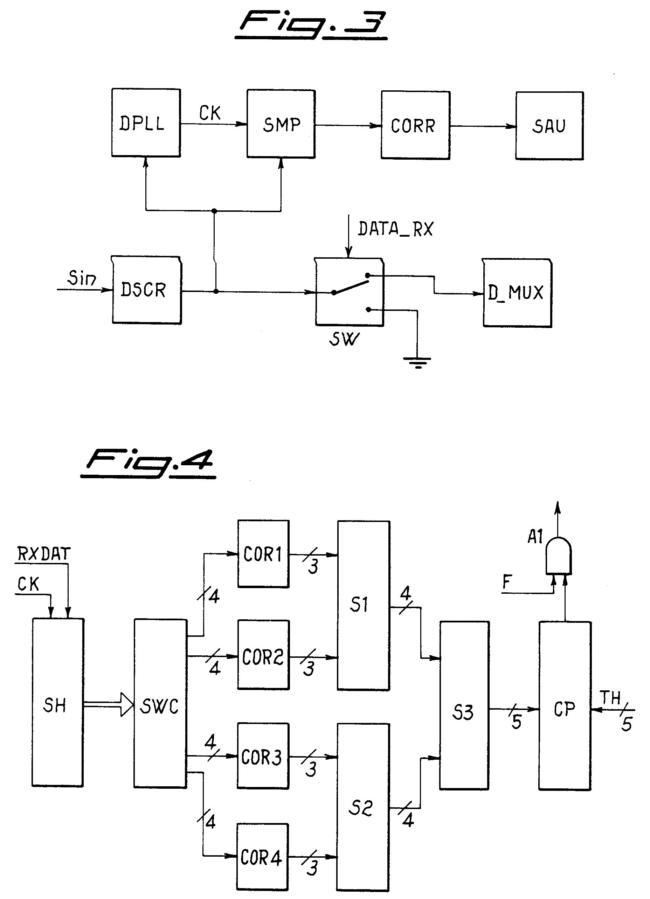

Referring now to Fig. 3 the signal Sin arriving at the receiver of the portable set in the downlink half frame passes through a discriminator DSCR emitting in output the data in a binary way. This data is sent to the switch SW which on command of a DATA_RX signal provides to forward them to the demultiplexer D_MUX (when the synchronization has been realized) or to discard them. Moreover the data is sent on one side to a phase connection circuit of the digital type DPLL for the recovery of the clock, and on the other side to a sampler SMP receiving the recovered clock signal CK. The output of the sampler SMP is connected to the circuit CORR which using the recovered clock carries out the correlation of the received data and sends them to a Synchronism Acquirement Unit SAU.

The SAU unit uses the procedure of the invention which will be described in a more detailed way hereafter.

Initially the portable in reception carries out a continuous research on the correlation function of the received signal in order to define if there are peaks higher than a first threshold level which according to a preferred embodiment is fixed equal to at least 95% of the theoretical maximum value for said peak (P).

If there is at least one peak of a level higher than the preset threshold the portable phone set is connected to this one, or it is only planned to receive the time slot (among the 12 possible ones) containing the word S having defined the above mentioned peak.

Then the reception of the following frames is limited to a time window of ± 7 bits around the 16 bits of the revealed peak reducing simultaneously the threshold to a second value preferably equal to 85% of said theoretical maximum value. This reduction turns out to be selective with respect to the spurious peaks as, on a narrow time window, the probability of wrong couplings are very reduced.

Therefore in the following frames comes true the correctness of the informations contained in the time slot received with this synchronism using for this aim the control bits (CRC) associated in each time slot to the signalling and traffic bits. In the case of a negative result the portable phone set disconnects from the wrong peak and starts again the continuous research already described increasing the threshold level to at least 95%, and extending the research on the correlation function of the entire received signal.

When instead the bit control has a positive result the bits received in the time slot are forwarded to the demultiplexer.

If the connection is not realized within a preset number of time slots the situation is considered to be abnormal (no signal in the area or the break down of the device).

According to a second embodiment of the invention the correlator CORR is prepared to carry out the correlation also on a word longer than 16 bits. Such word is obtained considering the last four bits S12 - S15 of the sequence for the recovery of the clock as being part of a prolonged word S12 - S32. From the moment that 12 bits may be sufficient for the clock recovery increasing the length of the word an improvement of the coupling capacity is obtained minimizing in this way possible packet losses and wrong couplings.

In fact particularly in conditions of high error rate (BER) prolonging the word to be recognized it becomes more unlikely that a bit sequence will be interpreted by error as a synchronism word.

Referring to Fig. 4 there will be now the illustration of a realization form of a synchronization circuit accomplishing the present invention.

This circuit includes a 16 bit long shift register SH receiving at the serial input the received bits RXDAT. The register is commanded by the recovered clock CK and makes the bits available in a form parallel to the inputs of a block SWC compared to the prefixed synchronism word. This block includes sixteen gates (not illustrated) of the type OR exclusive woth two inputs. Therefore the n-time output of the block SWC will be equal to 1 if the n-time received bit coincides with the n-time bit of the correlation word. The correlation function is given by the number of "1" which will be included within zero (no coinciding bit) and sixteen (all coinciding bits).

The sixteen outputs of SWC are subdivided in four groups of four, and each group constitutes the input of the same number of combinatorial networks COR1,..., COR4 each one of them supplying in output three bits representing in binary code the number of "1" present in input. To this network follows an adding block set up by two adders of three bits S1 and S2, each one of which receives in input six outputs of the combinatorial network and from an adder S3 of 4 bits fed by the outputs of S1 and S2. The five bits in output of the adder S3 indicate the correlation and are compared in the CP block with the prefixed threshold. If the threshold is exceeded a synchronism impulse is generated which will be "windowed" with a signal F in a AND gate A1 to avoid wrong synchronizations. If the impulse gets through this window it will preset counters (not shown) defining the timings of the time slot and the frame.

It will be understood by those skilled in the art that various other modifications and changes may be made by the present invention without departing from the scopo and spirit thereof.

## Claims

1. Method for the acquirement of the synchronism by a portable telephone set in a digital cordless telephony system where in each time slot a synchronism field (S) is transmitted including a first bit sequence for the adaptation of the clock of the portable telephone set and a second known sequence of bits suitable to generate a signal presenting a peak (P) when its autocorrelation function is extracted,
characterized in that it provides the following phases:
a. carrying out continuously the autocorrelation function of the received signal;
b. checking if said correlation function contains a peak of a higher level than that of a first threshold level (S1) equal to a first fraction (F1) of the theoretical maximum value for said peak (P) corresponding to a preset maximum admissible number of errors with respect to said known sequence;
c. if the above mentioned verification gives a positive result defining the locking of the portable phone set on the time slot containing the synchronization field S having determined the above mentioned peak (P);
d. limiting the reception in the following half frames to the signals allocated in a time window of ± K bits around the bits of said second sequence reducing simultaneously the threshold to a second level (S2) equal to a second fraction (F2) of said theoretic maximum value;
e. checking in the following half frames the correctness of the time slot received with this synchronism through the control bits (CRC) associated in each time slot to the signalling and traffic bits, and if this verification turns out to be negative repeating the operations a.) - d.) for the following peaks of the autocorrelation function.

2. Method according to claim 1, characterized in that a certain number of the final bits for the clock adaptation are considered to be part of the sequence on which the correlation is carried out.

3. Method according to claim 2, characterized in that said final bits are in number of four (S12-S15).

4. Method according to claim 1, characterized in that said first threshold level (S1) is about 95% of the theoretic maximum value of said peak P.

5. Method according to claim 1, characterized in that said second threshold level (S2) is about 85% of the theoretic maximum value of said peak P.

6. Method according to claim 1, characterized in that said number K is about ± 7 bits.

7. Synchronization circuit according to the method of the above mentioned claims, characterized in that it includes:
- a shift register (SH) of a length of at least 16 bits, controlled by the recovered clock CK which receives on the serial input the received bits (RXDAT),
- a block (SWC) of comparison with the preset synchronism word, connected in parallel to said register (SH) and including gates of the exclusive OR type, which outputs are subdivided in groups of 4;
- a plurality of combinatorial networks (COR1 - COR4), each one having the inputs connected to one of said groups and an output on three wires;
- an adder block with two levels (S1, S2; S3) connected to said outputs of the combinatorial networks;
- a comparison block (CP) connected to the outputs of said adder block and to a preset threshold;
- an AND gate (A1) connected to the output of the comparator block (CP) and to a signal set up by a time window (F).
